# EUROPEAN PATENT SPECIFICATION

(11) **EP 4 121 913 B1**
(45) Date of publication and mention of the grant of the patent: **24.06.2026**
(21) Application number: 20724348.6
(22) Date of filing: 17.04.2020
(51) Int. Cl.: G06N 20/20, G06N 3/08, G06N 3/045, G06N 3/0464, G06N 3/09, G06N 3/098, G06N 3/0985

(54) **A NEURAL NETWORK SYSTEM FOR DISTRIBUTED BOOSTING FOR A PROGRAMMABLE LOGIC CONTROLLER WITH A PLURALITY OF PROCESSING UNITS**
EIN NEURONALES NETZWERKSYSTEM FÜR VERTEILTES BOOSTING FÜR EINE SPEICHERPROGRAMMIERBARE STEUERUNG MIT EINER VIELZAHL VON VERARBEITUNGSEINHEITEN
UN SYSTÈME DE RÉSEAU NEURONAL POUR L'AMPLIFICATION DISTRIBUÉE POUR UN CONTRÔLEUR LOGIQUE PROGRAMMABLE AVEC UNE PLURALITÉ D'UNITÉS DE TRAITEMENT

(43) Date of publication of application: 25.01.2023
(73) Proprietor: Siemens Aktiengesellschaft, 80333 München (DE)
(72) Inventor: XIA, Wei Xi, Daly City, California 94015 (US); YU, Xiaowen, Union City, California 94587 (US); TAMASKAR, Shashank, Mohali, Punjab 140306 (IN); APARICIO OJEA, Juan L., Moraga, California 94556 (US); CLAUSSEN, Heiko, Wayland, MA 01778 (US); UGALDE DIAZ, Ines, Redwood City, California 94061 (US); SEHR, Martin, Kensington, California 94707 (US); SOLOWJOW, Eugen, Berkeley, California 94709 (US); WEN, Chengtao, Redwood City, California 94065 (US)
(74) Representative: Isarpatent
(86) International application number: PCT/US2020/028694
(87) International publication number: WO 2021/211134

(56) References cited:
- US-A1- 2003 110 147
- US-A1- 2017 039 456
- US-A1- 2019 065 908
- SARKHAN BADIRLI ET AL: "Gradient Boosting Neural Networks: GrowNet", ARXIV.ORG, CORNELL UNIVERSITY LIBRARY, 201 OLIN LIBRARY CORNELL UNIVERSITY ITHACA, NY 14853, 19 February 2020 (2020-02-19), XP081603503
- KANIMOZHI S ET AL: "Multiple Real-time object identification using Single shot Multi-Box detection", 2019 INTERNATIONAL CONFERENCE ON COMPUTATIONAL INTELLIGENCE IN DATA SCIENCE (ICCIDS), IEEE, 21 February 2019 (2019-02-21), pages 1 - 5, XP033627137, DOI: 10.1109/ICCIDS.2019.8862041
- EUGEN SOLOWJOW ET AL: "Industrial Robot Grasping with Deep Learning using a Programmable Logic Controller (PLC)", ARXIV.ORG, CORNELL UNIVERSITY LIBRARY, 201 OLIN LIBRARY CORNELL UNIVERSITY ITHACA, NY 14853, 21 April 2020 (2020-04-21), XP081650075

## Description

### BACKGROUND

### 1. Field

Aspects of the present invention generally relate to a neural network system for distributed neural network boosting for a programmable logic controller (PLC) with a plurality of processing units.

### 2. Description of the Related Art

Artificial intelligence (AI) is set to play a key role in reducing the programming and engineering effort required to create automation solutions. The first important step for integrating AI into the automation environment is a Neural Processing Unit (NPU) module. A common challenge when working with an edge device such as a Technology Module (TM) NPU is its resource limitation. Processing speed, memory size, and storage can constrict the applicability of the device. The NPU specializes in computation of feedforward neural networks (NNs). It takes a tensor input and performs a series of tensor operations to calculate for the output. Using image detection as an example application, the input is an image while the outputs are bounding boxes and classifications of the objects detected. Such a large input space (number of pixels) and output space (number of possible bounding boxes and classes) usually require the NN model to have a high Vapnik-Chervonenkis (VC) dimension to effectively capture an underlying distribution in the training data.

To support a high VC dimension, the NN must have a large number of nodes and layers in its computational graph. However, there are three potential problems associated with having a large graph. First, the model can easily overfit to training data, rendering it less accurate and less generalizable. Secondly, the speed of the computation may not be enough for a real-time application due to the limit of processing speed. Lastly, an edge device may not have sufficient computation resource to even process the graph. The bottleneck is often the volatile memory capacity needed to store the graph at runtime. As a result, the maximum VC dimension of a deep neural network is often limited by the edge device's available memory.

Presently, the NPU is limited to only running a single neural network to perform a specific application. This neural network model is often purposefully designed to have just the right number of VC dimension for the application. Therefore, scalability is not an option under the computational resource constraint. Using image detection as an example again, such limitation effectively means that the NN model can only identify up to a limited number of classes with limited accuracy. The Mobilenets is the current state-of-the-art pre-trained model that performs object detection in edge devices (i.e., mobile phone). It is trained on the ImageNet with up to 1000 different classes. It presents global hyperparameters for users to adjust the trade-off between accuracy and latency due to resource limitation. The article SARKHAN BADIRLI ET AL: "Gradient Boosting Neural Networks: GrowNet", ARXIV.ORG, 19 February 2020, pertains to neural network boosting and ensemble learning. The article KANIMOZHI S ET AL: "Multiple Real-time object identification using Single shot Multi-Box detection", 2019 INTERNATIONAL CONFERENCE ON COMPUTATIONAL INTELLIGENCE IN DATA SCIENCE (ICCIDS), IEEE, 21 February 2019, pertains boosting for image detection using a single shot detector as a weak learner.

Therefore, there is a need for a learning method which enables a PLC to use more than one NPU to scale an application.

### SUMMARY

Briefly described, aspects of the present invention relate to a distributed ensemble learning method which enables a PLC to use more than one Neural Processing Unit (NPU) to scale an application. It is called Adaptive Boosting (AdaBoost). The high-level idea of this algorithm is to train multiple weak learners, which are then used to "vote" for a final hypothesis. Weak learners are machine learning models that do not capture the entire data distribution and are purposefully designed to predict with lower accuracy. In this case, neural networks are used as weak learners. The advantage of the invention is to leverage a distributed computing method and a machine learning boosting algorithm to scale applications by using more than one NPU. The image detection, used as an example, has high dimensional inputs and outputs. The art solution, Mobilenets, gives users the flexibility to modify a model's size so it fits into the edge device's resource limitation, but it is trading the model accuracy for smaller model size. Its accuracy drops when the model's complexity is reduced. The proposed invention makes no such trade-off. The AdaBoost combines multiple distributed neural network models to create a more complex model without reaching the resource limitation.

In accordance with claim 1, a computer-implemented method of distributed neural network boosting performed by a neural network system is provided.

In accordance with claim 9, a neural network system is provided for distributed neural network boosting.

In accordance with claim 11, a non-transitory computer-readable storage medium encoded with executable instructions is provided.

### BRIEF DESCRIPTION OF THE DRAWINGS

FIG. 1 illustrates a block diagram of a neural network system for distributed neural network boosting for a programmable logic controller (PLC) with a plurality of processing units such as Neural Processing Units (NPUs) in accordance with an exemplary embodiment of the present invention.
FIG. 2 illustrates a block diagram of training weak neural networks offline in accordance with an exemplary embodiment of the present invention.
FIG. 3 shows a block diagram of loading neural networks (NNs) into NPUs in accordance with an exemplary embodiment of the present invention.
FIG. 4 illustrates feed forward operation for prediction in accordance with an exemplary embodiment of the present invention.
FIG. 5 illustrates overall pipeline in accordance with an exemplary embodiment of the present invention.
FIG. 6 illustrates a schematic view of a flow chart of a computer-implemented method of distributed neural network boosting for an image detection task in accordance with an exemplary embodiment of the present invention.
FIG. 7 illustrates a schematic view of a flow chart of a computer-implemented method of distributed neural network boosting performed by a neural network system in accordance with an exemplary embodiment of the present invention.
FIG. 8 shows an example of a computing environment within which embodiments of the disclosure may be implemented.

### DETAILED DESCRIPTION

To facilitate an understanding of embodiments, principles, and features of the present invention, they are explained hereinafter with reference to implementation in illustrative embodiments. In particular, they are described in the context of a neural network system for distributed neural network boosting for a programmable logic controller (PLC) with a plurality of processing units such as Neural Processing Units (NPUs). Distributed neural network boosting is provided in an NPU. An AdaBoost algorithm is used to boost multiple neural networks as weak learners, each of which can reside in a separate NPU so they can utilize resources independently and perform computation concurrently. With the AdaBoost training, each weak learner focuses on a resampled subset of the dataset. Combining all the outputs allows the overall model to expand the Vapnik-Chervonenkis (VC) dimension, effectively covering a larger underlying distribution of the data. Currently, the VC dimension of a model implemented in the NPU is limited by its computational resource. And such limitation directly equates to narrower applicability of the device as the model has limited capacity to learn a complicated distribution. The invention eliminates the limitation, enabling the NPU to scale the applications.

The components and materials described hereinafter as making up the various embodiments are intended to be illustrative and not restrictive. Many suitable components and materials that would perform the same or a similar function as the materials described herein are intended to be embraced within the scope of embodiments of the present invention as defined by the appended claims.

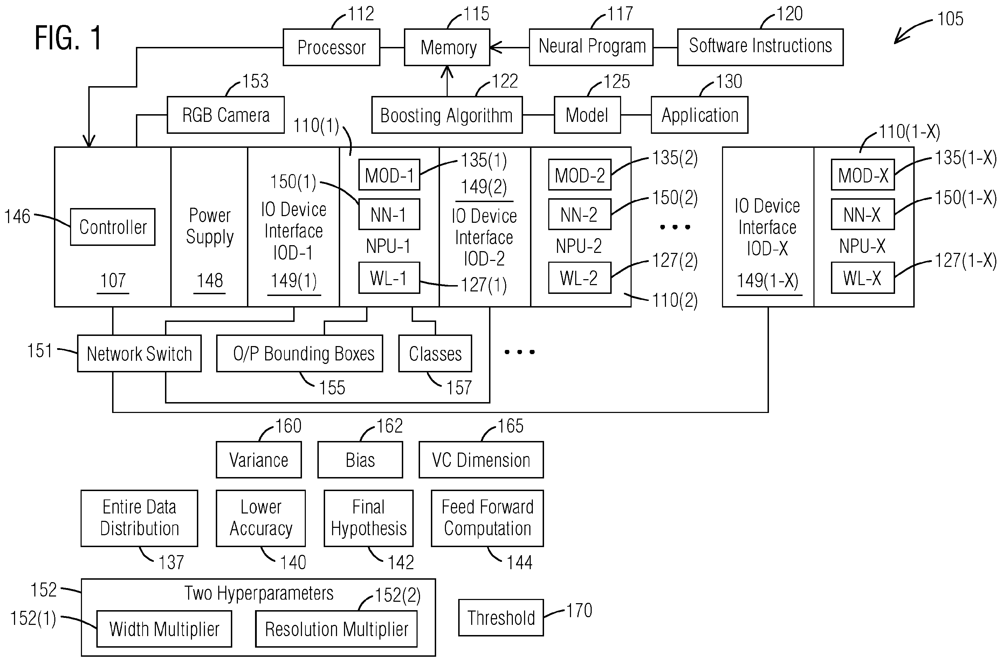

These and other embodiments of a neural network system according to the present disclosure are described below with reference to FIGs. 1-8 herein. Like reference numerals used in the drawings identify similar or identical elements throughout the several views. The drawings are not necessarily drawn to scale.

Consistent with one embodiment of the present invention, FIG. 1 represents a block diagram of a neural network system 105 for distributed neural network boosting in accordance with an exemplary embodiment of the present invention. The distributed neural network boosting is for a programmable logic controller (PLC) system with a PLC 107 and a plurality of processing units such as Neural Processing Units (NPUs) 110(1-x) in accordance with an exemplary embodiment of the present invention. Users can connect compatible sensors such as cameras or microphones to integrated interfaces of an NPU module. The data of the connected sensor systems, as well as information from a CPU program itself, can be processed using neural networks. The result of processing is then evaluated in a CPU program. The NPU module for a controller and an I/O system has a chip with artificial intelligence (AI) capability. For example, an NPU (neural processing unit) may be equipped with a vision processing unit, thus enabling the efficient processing of neural networks. The NPU module gets its function from the provision of a trained neural system on an SD card and is equipped with the USB 3.1 interfaces and a Gigabit Ethernet port. On the basis of the neural network, data from a connected sensor system or from the CPU program can be processed. By using machine-learning algorithms, for example, visual quality checks in production plants or image-guided robot systems can be efficiently realized. This makes a considerably more efficient and more "human-like" behavior possible.

The distributed neural network boosting is a novel approach to divide computations of a machine learning model into multiple computers or hardware devices. This approach leverages the boosting technique to train more than one model (aka weak learners), which will produce a final prediction altogether. A model is a machine learning model that can be trained to map input data to output prediction. A weak learner is a machine learning model that is purposely designed to be lightweight and simple. It is expected to learn only from the subset of the training data, so it won't be a strong predictor by itself.

The neural network system 105 comprises a processor 112 and an accessible memory 115 storing a neural program 117 comprising software instructions 120 that when executed by the processor 112 are configured to provide a boosting algorithm 122 that distributes a model 125 among the plurality of processing units 110(1-x) each being a weak learner of multiple weak learners (WLs) 127(1-x) that can perform computations independent from one another yet process data concurrently.

The boosting algorithm 122 is one of ensemble algorithms in supervised learning that is used to reduce a bias 162 and variance 160. It involves sequentially training the weak learners (WLs) 127(1-x) with varying weight distributions in a sample dataset. And then all the trained weak learners together can produce the final prediction. The variance 160 in probability theory and statistics is the expectation of the squared deviation of a random variable from its mean. Informally, it measures how far a set of numbers are spread out from their average value. The bias 162 is a feature of a statistical technique or of its results whereby the expected value of the results differs from the true underlying quantitative parameter being estimated.

The software instructions 120 enable a distributed ensemble learning which enables the programmable logic controller (PLC) 107 to use more than one processing units of the plurality of processing units 110(1-x) to scale an application 130. The distributed ensemble learning is a family of algorithms in supervised learning where multiple weaker learners (WLs) 127(1-x) were trained individually and then all of which will be combined to produce a prediction.

The software instructions 120 train the multiple weak learners (WLs) 127(1-x) using the boosting algorithm 122. The multiple weak learners (WLs) 127(1-x) are machine learning models (MODs) 135(1-x) that do not capture an entire data distribution 137 and are purposefully designed to predict with a lower accuracy 140. The entire data distribution 137 is a function or a listing which shows all the possible values (or intervals) of the data. It also (and this is important) tells how often each value occurs. Accuracy is the number of correct predictions divided by the total number of predictions. A weak learner doesn't need to have a high accuracy. The lower accuracy 140 allows them to be lightweight and fast.

The software instructions 120 use the multiple weak learners (WLs) 127(1-x) to vote for a final hypothesis 142 based on a feed forward computation 144 of neural networks (NNs) 150(1-x). The final hypothesis 142 is a final prediction that a machine learning model outputs. In one embodiment, neural networks (NNs) 150(1-x) are used as the multiple weak learners (WLs) 127(1-x). The feed forward computation 144 is a matrix computation of a neural network during the prediction phase (antonym of back propagation).

The NPU 110 is an edge device designed to be used in the PLC system. An edge device is a hardware device that can locally perform optimized matrix operations rather than relying on connectivity such as a cloud computation. FIG. 1 contains the minimum components that are required for the NPUs 110 to function. The PLC 107 comprises a controller 146 that processes the data from sensors or camera, send to the NPUs 110, and then aggregate the predictions for the final hypothesis 142. A power supply 148 provides power to all the components. An input/output (I/O) device interface 149(1-x) allows the NPU 110 to communicate with the controller 146 via the Profinet protocol. And additional components such as I/O modules could be added to the system 105 to collect sensor data and send out control signals. Input/output (I/O) device interfaces 149(1-x) are connected to PLC 107 through a network switch 151. A RGB camera 153 may be connected to the PLC 107 for image detection.

The boosting algorithm 122 is applied to image detection. A single shot detector (SSD) is used as a weak learner 127 while at least two hyperparameters 152(1-2) are used to intentionally render the model 125 weak. The two hyperparameters 152 are adjustable to achieve different performance or result in the machine learning model 125. The two hyperparameters 152 include a width multiplier 152(1) that thins the neural network system 105 at each layer and a resolution multiplier 152(2) that reduces an input image resolution. Accuracy of the model 125 and speed is adjusted with the two hyperparameters 152. Accuracy is the number of correct predictions divided by the total number of predictions. In image detection, it could also be a metric measured by the intersection over union (IOU) of the bounding boxes of the detected objects. Speed is the computation speed of the machine learning model 125 (i.e. how fast the model 125 produces a final prediction).

Each model of models (MODs) 135(1-x) being a WL 127 of the multiple weak learners (WLs) 127(1-x) returns a list of output bounding boxes 155 and their respective classes 157. The bounding boxes 155 capture the object of interest on an image. The boosting algorithm 122 may be used for a typical regression task or a classification task. In classification tasks, the machine learning model 125 is used to identify the class 157 of an object. For example, an image detection model trained to identify dogs and cats on images will produce bounding boxes labeled with the respective classes, dogs and cats. In a regression task, the machine learning model 125 is used to predict a continuous sample variable. For example, an image detection model trained to find human will calculate the center, width and height of a bounding box which are a continuous variable (as opposed to a discrete class).

The boosting algorithm 122 guarantees a reduction in the variance 160 without increasing the bias 162 thus making the model 125 more generalizable. The boosting algorithm 122 combines multiple distributed neural network models (MODs) 135(1-x) to create a more complex model without reaching a resource limitation. For example, computation resources of a computer or a hardware device such as the processing power and memory are limited. Such resource limitation can place an upper bound on the speed as well as the accuracy of the model predictions.

The boosting algorithm 122 combines all outputs to allow the model 125 to expand a Vapnik-Chervonenkis (VC) dimension 165 effectively covering a larger underlying distribution of training data. The Vapnik-Chervonenkis (VC) dimension 165 is a measure of the capacity (complexity, expressive power, richness, or flexibility) of a space of functions that can be learned by the machine learning model 125. With the boosting algorithm 122 training, each weak learner of the multiple weak learners (WLs) 127(1-x) focuses on a resampled subset of a dataset.

In order to apply the boosting algorithm 122 to image detection, there are two major modifications required. It can use the Mobilenets Single Shot Detector (SSD) as the weak learner. There are two hyperparameters 152(1-2) that can be used to intentionally render the model "weak" - the width multiplier 152(1) that thins a neural network at each layer and the resolution multiplier 152(2) that reduces the input image resolution. Based on the Table 1 and 2 below, the model accuracy and speed can be easily adjusted with these two hyperparameters 152(1-2).

**Table 1: MobileNet Width Multiplier**

| Width Multiplier | ImageNet Accuracy | Million Mult-Adds | Million Parameters |
|---|---|---|---|
| 1.0 MobileNet-224 | 70.6% | 569 | 4.2 |
| 0.75 MobileNet-224 | 68.4% | 325 | 2.6 |
| 0.5 MobileNet-224 | 63.7% | 149 | 1.3 |
| 0.25 MobileNet-224 | 50.6% | 41 | 0.5 |

**Table 2: MobileNet Resolution**

| Resolution | ImageNet Accuracy | Million Mult-Adds | Million Parameters |
|---|---|---|---|
| 1.0 MobileNet-224 | 70.6% | 569 | 4.2 |
| 1.0 MobileNet-192 | 69.1% | 418 | 4.2 |
| 1.0 MobileNet-160 | 67.2% | 290 | 4.2 |
| 1.0 MobileNet-128 | 64.4% | 186 | 4.2 |

The boosting algorithm 122 can train the weak learners (WLs) 127(1-x) as described below in Table 3 of the Boosting Neural Networks. However, the voting of the final hypothesis (the "Output" section) will need special care depending on applications.

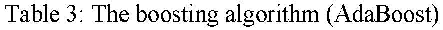

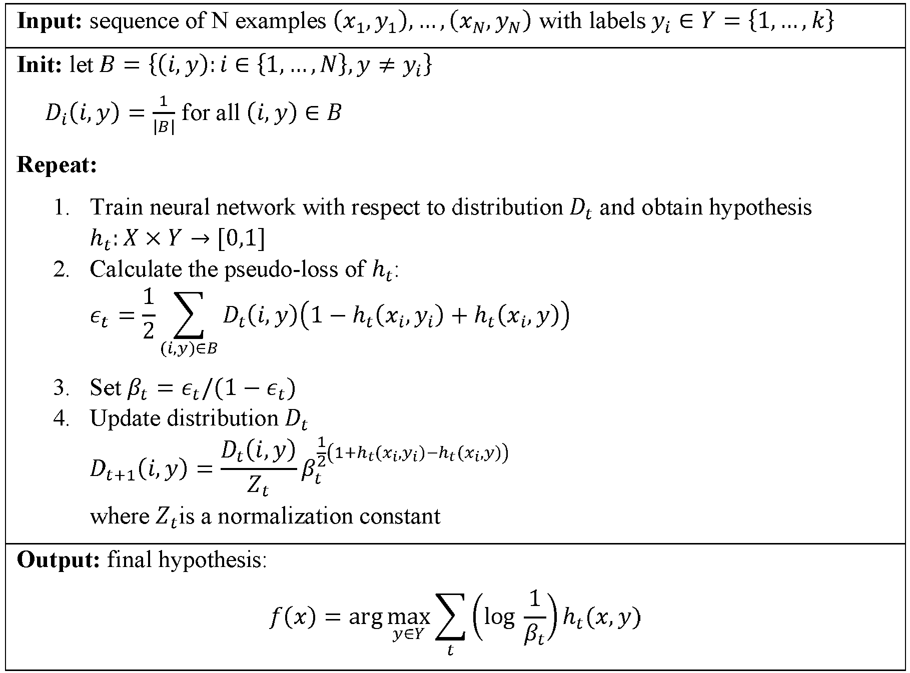

For the typical regression or classification tasks, the boosting algorithm 122 detailed above can be used directly. For image detection tasks, the final output hypothesis cannot be a simple weighted sum as each model 135(1-x) of the weak learners (WLs) 127(1-x) (i.e. SSD) returns a list of bounding boxes 155 and their respective classes 157. To appropriately combine the weak learners' results, all the output bounding boxes 155 and classes 157 shall be grouped together into a set. This set can contain many low-confidence predictions and duplicates. Therefore, it is important to discard the low confidence predictions by a threshold 170 and then apply the Non-Maximum Suppression to reduce the duplicates.

The boosting algorithm 122 can guarantee a reduction in the variance 160 without increasing the bias 162, making the model 125 more generalizable. This benefit solves the first overfitting problem. Another advantage is the convenience of distributing the model 125 among multiple processing units 110(1-x). Since each weak learner 127 can perform computations independent from one another, they can reside in separate NPU's. With multiple NPU's 110(1-x) processing the data concurrently, it will solve the two problems related to computational speed and memory limitation. This method will improve the scalability and flexibility of the NPU 110, making it applicable to a broader group of tasks.

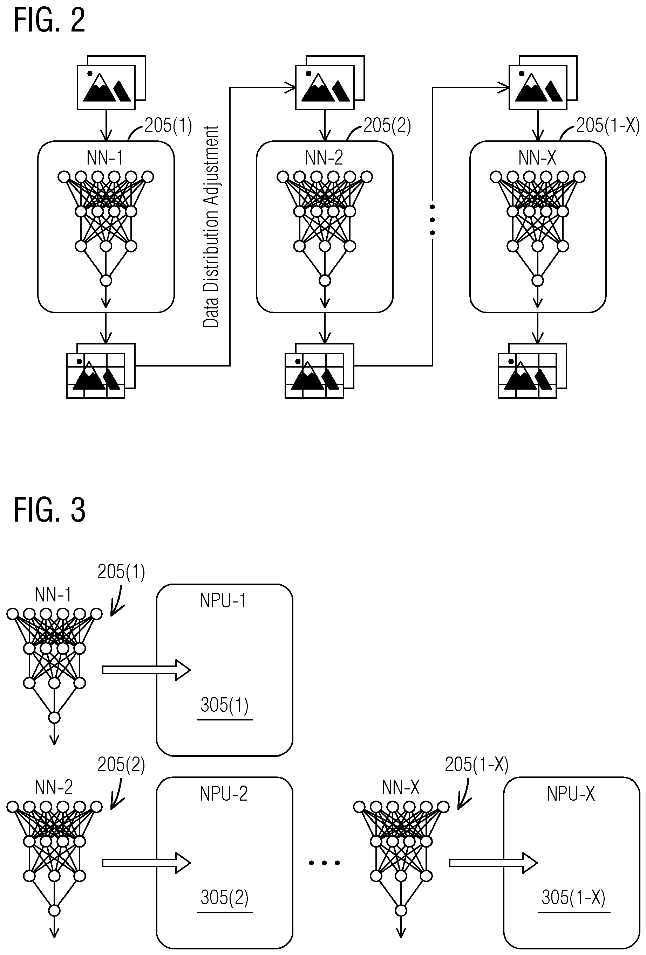

Referring to FIG. 2, it illustrates training weak neural networks (NNs) 205(1-x) offline in accordance with an exemplary embodiment of the present invention. The first step is to sequentially train multiple weak neural networks (NNs) 205(1-x) using the boosting algorithm 122. These NNs 205(1-x) will be trained on different subsets of the sample data based on a sampling distribution. Such distribution will be updated each time a NN 205 is trained. The idea is that some data points may be difficult to learn from and so wrong predictions would often be made. Therefore, the boosting algorithm 122 purposely increases the weights of these difficult data, forcing the subsequent NNs to focus only on certain data subset.

Turning now to FIG. 3, it illustrates loading neural networks (NNs) 205(1-x) into NPUs 305(1-x) in accordance with an exemplary embodiment of the present invention. After the trainings in FIG. 2, the NNs' graph and weights can be saved to files on a hard disk. These files can each be transferred into a memory card and loaded into the Neural Processing Units (NPUs) 305(1-x).

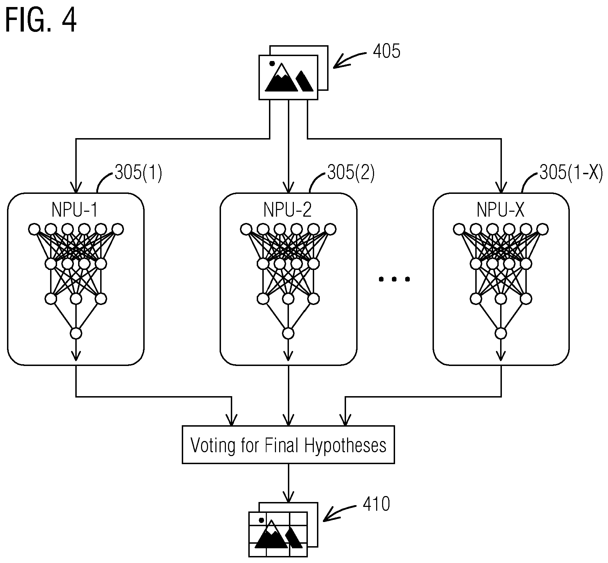

FIG. 4 illustrates feeding forward for prediction in accordance with an exemplary embodiment of the present invention. The NPUs' can independently perform feed-forward computations from input data 405 to generate predictions. When all the predictions reach a PLC CPU memory, a voting heuristic will aggregate those individual predictions to generate one final prediction 410. A voting heuristic is presented in the boosting algorithm 122, but users can design their own heuristic depending on their application, performance, and predictive quality.

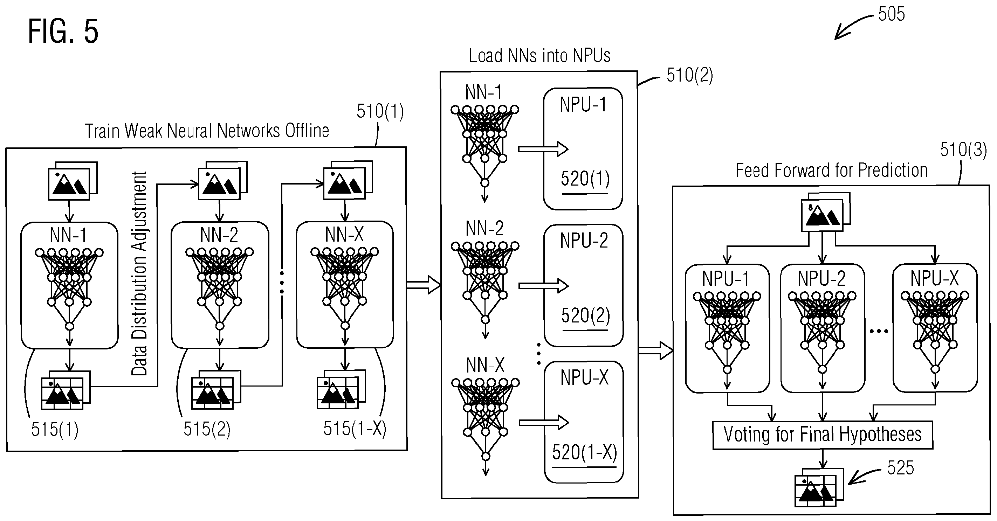

As seen in FIG. 5, it illustrates an overall pipeline 505 in accordance with an exemplary embodiment of the present invention. The pipeline 505 generally comprises three stages 510(1-3). In the first stage 510(1), the users will have to train weak neural networks (NNs) 515(1-x) offline with a sample dataset according to the boosting algorithm 122. The number of iterations and weak NNs 515(1-x) depend on the number of Neural Processing Units (NPU) 520(1-x) to be distributed over. Hyperparameters 152 are to be fine-tuned in this step to produce the desired prediction result. After the weak NNs 515(1-x) are sufficiently trained, their respective graph structure and weights will be loaded into separate NPUs in the second stage 510(2). These NPUs 520(1-x) with the weak NNs 515(1-x) will be able to perform the feed forward operation in the third stage 510(3), their outputs can be aggregated to form a final hypothesis 525.

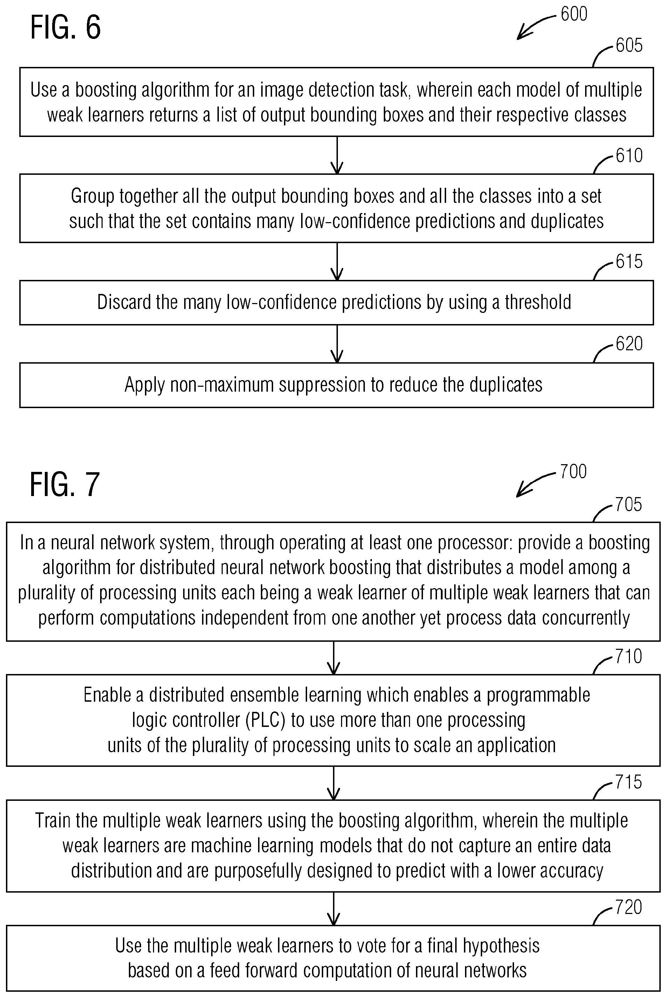

As shown in FIG. 6, it illustrates a schematic view of a flow chart of a computer-implemented method 600 of distributed neural network boosting for an image detection task in accordance with an exemplary embodiment of the present invention. Reference is made to the elements and features described in FIGs. 1-5. It should be appreciated that some steps are not required to be performed in any particular order, and that some steps are optional.

The method 600 performed by a neural network system comprises a step 605 of using the boosting algorithm 122 for an image detection task. Each model of the multiple weak learners (WLs) 127(1-x) returns a list of output bounding boxes 155 and their respective classes 157. The method 600 further comprises a step 610 of grouping together all the output bounding boxes 155 and all the classes 157 into a set such that the set contains many low-confidence predictions and duplicates. The method 600 further comprises a step 615 of discarding the many low-confidence predictions by using the threshold 170. The method 600 further comprises a step 620 of applying non-maximum suppression to reduce the duplicates.

In FIG. 7, it illustrates a schematic view of a flow chart of a computer-implemented method 700 of distributed neural network boosting performed by a neural network system in accordance with an exemplary embodiment of the present invention. Reference is made to the elements and features described in FIGs. 1-5. It should be appreciated that some steps are not required to be performed in any particular order, and that some steps are optional.

The method 700 comprises through operating at least one processor a step 705 of providing the boosting algorithm 122 that distributes the model 125 among the plurality of processing units 110(1-x) each being a weak learner of multiple weak learners (WLs) 127(1-x) that can perform computations independent from one another yet process data concurrently. The method 700 further comprises a step 710 of enabling a distributed ensemble learning which enables a programmable logic controller (PLC) to use more than one processing units of the plurality of processing units to scale an application. The method 700 further comprises a step 715 of training the multiple weak learners using the boosting algorithm. The multiple weak learners are machine learning models that do not capture an entire data distribution and are purposefully designed to predict with a lower accuracy. The method 700 further comprises a step 720 of using the multiple weak learners to vote for a final hypothesis based on a feed forward computation of neural networks.

The techniques described herein can be particularly useful for feed forward computation for prediction. While particular embodiments are described in terms of the feed forward computation, the techniques described herein are not limited to feed forward computation but can also be used with other neural networks.

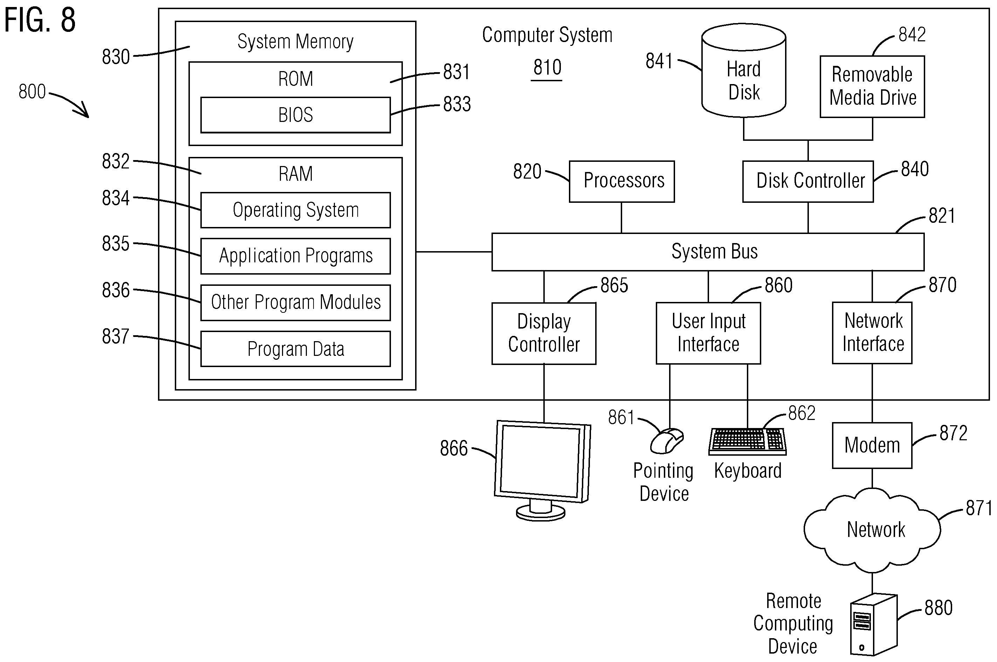

With regard to FIG. 8, it shows an example of a computing environment 800 within which embodiments of the disclosure may be implemented. For example, this computing environment 800 may be configured to execute the neural network system discussed above with reference to FIG. 1 or to execute portions of the method 700 described above with respect to FIG. 7. Computers and computing environments, such as computer system 810 and computing environment 800, are known to those of skill in the art and thus are described briefly here.

As shown in FIG. 8, the computer system 810 may include a communication mechanism such as a bus 821 or other communication mechanism for communicating information within the computer system 810. The computer system 810 further includes one or more processors 820 coupled with the bus 821 for processing the information. The processors 820 may include one or more central processing units (CPUs), graphical processing units (GPUs), or any other processor known in the art.

The computer system 810 also includes a system memory 830 coupled to the bus 821 for storing information and instructions to be executed by processors 820. The system memory 830 may include computer readable storage media in the form of volatile and/or nonvolatile memory, such as read only memory (ROM) 831 and/or random access memory (RAM) 832. The system memory RAM 832 may include other dynamic storage device(s) (e.g., dynamic RAM, static RAM, and synchronous DRAM). The system memory ROM 831 may include other static storage device(s) (e.g., programmable ROM, erasable PROM, and electrically erasable PROM). In addition, the system memory 830 may be used for storing temporary variables or other intermediate information during the execution of instructions by the processors 820. A basic input/output system (BIOS) 833 containing the basic routines that helps to transfer information between elements within computer system 810, such as during start-up, may be stored in ROM 831. RAM 832 may contain data and/or program modules that are immediately accessible to and/or presently being operated on by the processors 820. System memory 830 may additionally include, for example, operating system 1034, application programs 835, other program modules 836 and program data 837.

The computer system 810 also includes a disk controller 840 coupled to the bus 821 to control one or more storage devices for storing information and instructions, such as a hard disk 841 and a removable media drive 842 (e.g., floppy disk drive, compact disc drive, tape drive, and/or solid state drive). The storage devices may be added to the computer system 810 using an appropriate device interface (e.g., a small computer system interface (SCSI), integrated device electronics (IDE), Universal Serial Bus (USB), or FireWire).

The computer system 810 may also include a display controller 865 coupled to the bus 821 to control a display 866, such as a cathode ray tube (CRT) or liquid crystal display (LCD), for displaying information to a computer user. The computer system includes an input interface 860 and one or more input devices, such as a keyboard 862 and a pointing device 861, for interacting with a computer user and providing information to the processor 820. The pointing device 861, for example, may be a mouse, a trackball, or a pointing stick for communicating direction information and command selections to the processor 820 and for controlling cursor movement on the display 866. The display 866 may provide a touch screen interface which allows input to supplement or replace the communication of direction information and command selections by the pointing device 1061.

The computer system 810 may perform a portion or all of the processing steps of embodiments of the invention in response to the processors 820 executing one or more sequences of one or more instructions contained in a memory, such as the system memory 830. Such instructions may be read into the system memory 830 from another computer readable medium, such as a hard disk 841 or a removable media drive 842. The hard disk 841 may contain one or more datastores and data files used by embodiments of the present invention. Datastore contents and data files may be encrypted to improve security. The processors 820 may also be employed in a multiprocessing arrangement to execute the one or more sequences of instructions contained in system memory 830. In alternative embodiments, hard-wired circuitry may be used in place of or in combination with software instructions. Thus, embodiments are not limited to any specific combination of hardware circuitry and software.

As stated above, the computer system 810 may include at least one computer readable medium or memory for holding instructions programmed according to embodiments of the invention and for containing data structures, tables, records, or other data described herein. The term "computer readable medium" as used herein refers to any medium that participates in providing instructions to the processor 820 for execution. A computer readable medium may take many forms including, but not limited to, nonvolatile media, volatile media, and transmission media. Non-limiting examples of nonvolatile media include optical disks, solid state drives, magnetic disks, and magnetooptical disks, such as hard disk 841 or removable media drive 842. Non-limiting examples of volatile media include dynamic memory, such as system memory 830. Non-limiting examples of transmission media include coaxial cables, copper wire, and fiber optics, including the wires that make up the bus 821. Transmission media may also take the form of acoustic or light waves, such as those generated during radio wave and infrared data communications.

The computing environment 800 may further include the computer system 810 operating in a networked environment using logical connections to one or more remote computers, such as remote computer 880. Remote computer 880 may be a personal computer (laptop or desktop), a mobile device, a server, a router, a network PC, a peer device or other common network node, and typically includes many or all of the elements described above relative to computer system 810. When used in a networking environment, computer system 810 may include modem 872 for establishing communications over a network 871, such as the Internet. Modem 872 may be connected to bus 821 via user network interface 870, or via another appropriate mechanism.

Network 871 may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between computer system 810 and other computers (e.g., remote computer 880). The network 871 may be wired, wireless or a combination thereof. Wired connections may be implemented using Ethernet, Universal Serial Bus (USB), RJ-11 or any other wired connection generally known in the art. Wireless connections may be implemented using Wi-Fi, WiMAX, and Bluetooth, infrared, cellular networks, satellite or any other wireless connection methodology generally known in the art. Additionally, several networks may work alone or in communication with each other to facilitate communication in the network 871.

In some embodiments, the computer system 810 may be utilized in conjunction with a parallel processing platform comprising a plurality of processing units. This platform may allow parallel execution of one or more of the tasks associated with optimal design generation, as described above. For the example, in some embodiments, execution of multiple product lifecycle simulations may be performed in parallel, thereby allowing reduced overall processing times for optimal design selection.

The embodiments of the present disclosure may be implemented with any combination of hardware and software. In addition, the embodiments of the present disclosure may be included in an article of manufacture (e.g., one or more computer program products) having, for example, computer-readable, non-transitory media. The media has embodied therein, for instance, computer readable program code for providing and facilitating the mechanisms of the embodiments of the present disclosure. The article of manufacture can be included as part of a computer system or sold separately.

While various aspects and embodiments have been disclosed herein, other aspects and embodiments will be apparent to those skilled in the art. The various aspects and embodiments disclosed herein are for purposes of illustration and are not intended to be limiting, with the scope being indicated by the following claims.

An executable application, as used herein, comprises code or machine readable instructions for conditioning the processor to implement predetermined functions, such as those of an operating system, a context data acquisition system or other information processing system, for example, in response to user command or input. An executable procedure is a segment of code or machine readable instruction, sub-routine, or other distinct section of code or portion of an executable application for performing one or more particular processes. These processes may include receiving input data and/or parameters, performing operations on received input data and/or performing functions in response to received input parameters, and providing resulting output data and/or parameters.

A graphical user interface (GUI), as used herein, comprises one or more display images, generated by a display processor and enabling user interaction with a processor or other device and associated data acquisition and processing functions. The GUI also includes an executable procedure or executable application. The executable procedure or executable application conditions the display processor to generate signals representing the GUI display images. These signals are supplied to a display device which displays the image for viewing by the user. The processor, under control of an executable procedure or executable application, manipulates the GUI display images in response to signals received from the input devices. In this way, the user may interact with the display image using the input devices, enabling user interaction with the processor or other device.

The functions and process steps herein may be performed automatically or wholly or partially in response to user command. An activity (including a step) performed automatically is performed in response to one or more executable instructions or device operation without user direct initiation of the activity.

The system and processes of the figures are not exclusive. Other systems, processes and menus may be derived in accordance with the principles of the invention to accomplish the same objectives. Although this invention has been described with reference to particular embodiments, it is to be understood that the embodiments and variations shown and described herein are for illustration purposes only. Modifications to the current design may be implemented by those skilled in the art, without departing from the scope of the invention. As described herein, the various systems, subsystems, agents, managers and processes can be implemented using hardware components, software components, and/or combinations thereof.

Computer readable medium instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, may be implemented by computer readable medium instructions.

It should be appreciated that the program modules, applications, computer-executable instructions, code, or the like depicted in FIG. 8 as being stored in the system memory are merely illustrative and not exhaustive and that processing described as being supported by any particular module may alternatively be distributed across multiple modules or performed by a different module. In addition, various program module(s), script(s), plug-in(s), Application Programming Interface(s) (API(s)), or any other suitable computer-executable code hosted locally on the computer system 810, the remote device, and/or hosted on other computing device(s) accessible via one or more of the network(s), may be provided to support functionality provided by the program modules, applications, or computer-executable code depicted in FIG. 8 and/or additional or alternate functionality. Further, functionality may be modularized differently such that processing described as being supported collectively by the collection of program modules depicted in FIG. 8 may be performed by a fewer or greater number of modules, or functionality described as being supported by any particular module may be supported, at least in part, by another module. In addition, program modules that support the functionality described herein may form part of one or more applications executable across any number of systems or devices in accordance with any suitable computing model such as, for example, a client-server model, a peer-to-peer model, and so forth. In addition, any of the functionality described as being supported by any of the program modules depicted in FIG. 8 may be implemented, at least partially, in hardware and/or firmware across any number of devices.

It should further be appreciated that the computer system 810 may include alternate and/or additional hardware, software, or firmware components beyond those described or depicted without departing from the scope of the disclosure. More particularly, it should be appreciated that software, firmware, or hardware components depicted as forming part of the computer system 810 are merely illustrative and that some components may not be present or additional components may be provided in various embodiments. While various illustrative program modules have been depicted and described as software modules stored in system memory, it should be appreciated that functionality described as being supported by the program modules may be enabled by any combination of hardware, software, and/or firmware. It should further be appreciated that each of the above-mentioned modules may, in various embodiments, represent a logical partitioning of supported functionality. This logical partitioning is depicted for ease of explanation of the functionality and may not be representative of the structure of software, hardware, and/or firmware for implementing the functionality. Accordingly, it should be appreciated that functionality described as being provided by a particular module may, in various embodiments, be provided at least in part by one or more other modules. Further, one or more depicted modules may not be present in certain embodiments, while in other embodiments, additional modules not depicted may be present and may support at least a portion of the described functionality and/or additional functionality. Moreover, while certain modules may be depicted and described as sub-modules of another module, in certain embodiments, such modules may be provided as independent modules or as sub-modules of other modules.

Although specific embodiments of the disclosure have been described, one of ordinary skill in the art will recognize that numerous other modifications and alternative embodiments are within the scope of the appended claims. For example, any of the functionality and/or processing capabilities described with respect to a particular device or component may be performed by any other device or component. Further, while various illustrative implementations and architectures have been described in accordance with embodiments of the disclosure, one of ordinary skill in the art will appreciate that numerous other modifications to the illustrative implementations and architectures described herein are also within the scope of the appended claims. In addition, it should be appreciated that any operation, element, component, data, or the like described herein as being based on another operation, element, component, data, or the like can be additionally based on one or more other operations, elements, components, data, or the like. Accordingly, the phrase "based on," or variants thereof, should be interpreted as "based at least in part on."

Although embodiments have been described in language specific to structural features and/or methodological acts, it is to be understood that the disclosure is not necessarily limited to the specific features or acts described. Rather, the specific features and acts are disclosed as illustrative forms of implementing the embodiments. Conditional language, such as, among others, "can," "could," "might," or "may," unless specifically stated otherwise, or otherwise understood within the context as used, is generally intended to convey that certain embodiments could include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

While embodiments of the present invention have been disclosed in exemplary forms, it will be apparent to those skilled in the art that many modifications, additions, and deletions can be made therein without departing from the scope of the invention and its equivalents, as set forth in the following claims.

Embodiments and the various features and advantageous details thereof are explained more fully with reference to the non-limiting embodiments that are illustrated in the accompanying drawings and detailed in the following description. Descriptions of well-known starting materials, processing techniques, components and equipment are omitted so as not to unnecessarily obscure embodiments in detail. It should be understood, however, that the detailed description and the specific examples, while indicating preferred embodiments, are given by way of illustration only and not by way of limitation. Various substitutions, modifications, additions and/or rearrangements within the scope of the underlying inventive concept will become apparent to those skilled in the art from this disclosure.

As used herein, the terms "comprises," "comprising," "includes," "including," "has," "having" or any other variation thereof, are intended to cover a non-exclusive inclusion. For example, a process, article, or apparatus that comprises a list of elements is not necessarily limited to only those elements but may include other elements not expressly listed or inherent to such process, article, or apparatus.

Additionally, any examples or illustrations given herein are not to be regarded in any way as restrictions on, limits to, or express definitions of, any term or terms with which they are utilized. Instead, these examples or illustrations are to be regarded as being described with respect to one particular embodiment and as illustrative only. Those of ordinary skill in the art will appreciate that any term or terms with which these examples or illustrations are utilized will encompass other embodiments which may or may not be given therewith or elsewhere in the specification and all such embodiments are intended to be included within the scope of that term or terms.

In the foregoing specification, the invention has been described with reference to specific embodiments. However, one of ordinary skill in the art appreciates that various modifications and changes can be made without departing from the scope of the invention. Accordingly, the specification and figures are to be regarded in an illustrative rather than a restrictive sense, and all such modifications are intended to be included within the scope of invention.

Although the invention has been described with respect to specific embodiments thereof, these embodiments are merely illustrative, and not restrictive of the invention. The description herein of illustrated embodiments of the invention is not intended to be exhaustive or to limit the invention to the precise forms disclosed herein (and in particular, the inclusion of any particular embodiment, feature or function is not intended to limit the scope of the invention to such embodiment, feature or function). Rather, the description is intended to describe illustrative embodiments, features and functions in order to provide a person of ordinary skill in the art context to understand the invention without limiting the invention to any particularly described embodiment, feature or function. While specific embodiments of, and examples for, the invention are described herein for illustrative purposes only, various equivalent modifications are possible within the scope of the invention, as those skilled in the relevant art will recognize and appreciate. As indicated, these modifications may be made to the invention in light of the foregoing description of illustrated embodiments of the invention and are to be included within the scope of the invention. Thus, while the invention has been described herein with reference to particular embodiments thereof, a latitude of modification, various changes and substitutions are intended in the foregoing disclosures, and it will be appreciated that in some instances some features of embodiments of the invention will be employed without a corresponding use of other features without departing from the scope of the invention as set forth Therefore, many modifications may be made to adapt a particular situation or material to the essential scope of the invention.

Respective appearances of the phrases "in one embodiment," "in an embodiment," or "in a specific embodiment" or similar terminology in various places throughout this specification are not necessarily referring to the same embodiment. Furthermore, the particular features, structures, or characteristics of any particular embodiment may be combined in any suitable manner with one or more other embodiments. It is to be understood that other variations and modifications of the embodiments described and illustrated herein are possible in light of the teachings herein and are to be considered as part of the scope of the invention

In the description herein, numerous specific details are provided, such as examples of components and/or methods, to provide a thorough understanding of embodiments of the invention. One skilled in the relevant art will recognize, however, that an embodiment may be able to be practiced without one or more of the specific details, or with other apparatus, systems, assemblies, methods, components, materials, parts, and/or the like. In other instances, well-known structures, components, systems, materials, or operations are not specifically shown or described in detail to avoid obscuring aspects of embodiments of the invention. While the invention may be illustrated by using a particular embodiment, this is not and does not limit the invention to any particular embodiment and a person of ordinary skill in the art will recognize that additional embodiments are readily understandable and are a part of this invention.

It will also be appreciated that one or more of the elements depicted in the drawings/figures can also be implemented in a more separated or integrated manner, or even removed or rendered as inoperable in certain cases, as is useful in accordance with a particular application.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component.

## Claims

1. A method (600) of distributed neural network boosting, the method (600, 700) performed by a neural network system (105) including a programmable logic controller (107), PLC, at least one processor (112, 820) and a plurality of processing units (110) and comprising:
through operating the at least one processor (112, 820):
1.1 providing (705) a boosting algorithm (122) that distributes a neural network model among the plurality of processing units (110), each of the plurality of processing units (110) being a weak learner (127) of multiple weak learners that can perform computations independent from one another yet process data concurrently, wherein for the weak learners (127) neural networks are used;
1.2 enabling (710) a distributed ensemble learning which enables the PLC to use more than one of the processing units (110) of the plurality of processing units (110) to scale an image detection application (130);
1.3 training (715) the multiple weak learners using the boosting algorithm (122), wherein the multiple weak learners do not capture an entire data distribution (137) and are purposefully designed to predict with a lower accuracy (140); and
1.4 using (720) the multiple weak learners to vote for a final hypothesis (142, 525) based on a feed forward computation of neural networks;
1.5 applying the boosting algorithm (122) to the image detection application ; and
1.6 using a single shot detector (SSD) weak learner (127) wherein at least two hyperparameters are used to intentionally render a neural network weak,
1.7 wherein the at least two hyperparameters include a width multiplier (152) that thins a neural network at each layer and a resolution multiplier (152) that reduces an input image resolution.

2. The method (600, 700) of claim 1, wherein each of the multiple weak learners returns a list of output bounding boxes (155) and their respective classes (157).

3. The method (600, 700) of claim 1, further comprising:
using the boosting algorithm (122) directly for a typical regression task or a classification task.

4. The method (600, 700) of claim 1, further comprising:
using the boosting algorithm (122) for an image detection task, wherein each of the multiple weak learners returns a list of output bounding boxes (155) and their respective classes (157);
grouping together all the output bounding boxes (155) and all the classes (157) into a set such that the set contains many low-confidence predictions and duplicates;
discarding the many low-confidence predictions by using a threshold (170); and
applying non-maximum suppression to reduce the duplicates.

5. The method (600, 700) of claim 1, wherein the boosting algorithm (122) guarantees a reduction in variance without increasing a bias (162) thus making the neural network model more generalizable.

6. The method (600, 700) of claim 1, wherein the boosting algorithm (122) combines multiple distributed neural network models (125, 135) to create a more complex neural network model

7. The method (600, 700) of claim 1, further comprising:
combining all outputs to allow the neural network model to expand a Vapnik-Chervonenkis (VC) dimension effectively covering a larger underlying distribution of training data.

8. The method (600, 700) of claim 1, further comprising:
with the boosting algorithm (122) training, each weak learner (127) of the multiple weak learners focuses on a resampled subset of a dataset.

9. A neural network system (105) for distributed neural network boosting, the system (105, 810, 1034) comprising a programmable logic controller (107), PLC, a plurality of processing units (110), a processor (112, 820); and an accessible memory storing a neural program comprising software instructions (120) that when executed by the processor (112, 820) are configured to:
provide a boosting algorithm (122) that distributes a neural network model among a plurality of processing units (110), each of the plurality of processing units (110) being a weak learner (127) of multiple weak learners that can perform computations independent from one another yet process data concurrently, wherein for the weak learners (127) neural networks are used;
enable a distributed ensemble learning which enables the PLC to use more than one of the processing units (110) of the plurality of processing units (110) to scale an image detection application (130);
train the multiple weak learners using the boosting algorithm (122), wherein the multiple weak learners do not capture an entire data distribution (137) and are purposefully designed to predict with a lower accuracy (140); and
use the multiple weak learners to vote for a final hypothesis (142, 525) based on a feed forward computation of neural networks.
apply the boosting algorithm (122) to the image detection application; and
use a single shot detector (SSD) weak learner (127) wherein at least two hyperparameters are used to intentionally render a neural network weak,
wherein the at least two hyperparameters include a width multiplier (152) that thins a neural network at each layer and a resolution multiplier (152) that reduces an input image resolution.

10. The neural network system (105) of claim 9, wherein each of the multiple weak learners returns a list of output bounding boxes (155) and their respective classes (157).

11. A non-transitory computer-readable storage medium encoded with instructions which, when executed by at least one processor (112, 820), a programmable logic controller (107), PLC, and a plurality of processing units (110) of a neural network system (105) according to claim 9, carry out the method according to one or more of claims 1 to 8.

## Patentansprüche

1. Verfahren (600) zum Boosten verteilter neuronaler Netzwerke, wobei das Verfahren (600, 700) durch ein neuronales Netzwerksystem (105) durchgeführt wird, das eine programmierbare Logiksteuerung (107), PLC, mindestens einen Prozessor (112, 820) und eine Vielzahl von Verarbeitungseinheiten (110) beinhaltet, und umfassend:
durch den Betrieb des mindestens einen Prozessors (112, 820):
1.1 Bereitstellen (705) eines Boosting-Algorithmus (122), der ein neuronales Netzwerkmodell auf die Vielzahl von Verarbeitungseinheiten (110) verteilt, wobei jede der Vielzahl von Verarbeitungseinheiten (110) ein schwacher Lerner (127) mehrerer schwacher Lerner ist, die Berechnungen unabhängig voneinander durchführen können, aber gleichzeitig Daten verarbeiten, wobei für die schwachen Lerner (127) neuronale Netzwerke verwendet werden;
1.2 Aktivieren (710) eines verteilten Ensemble-Lernens, das es der PLC ermöglicht, mehr als eine der Verarbeitungseinheiten (110) der Vielzahl von Verarbeitungseinheiten (110) zu verwenden, um eine Bilddetektionsanwendung (130) zu skalieren;
1.3 Trainieren (715) der mehreren schwachen Lerner unter Verwendung des Boosting-Algorithmus (122), wobei die mehreren schwachen Lerner keine gesamte Datenverteilung (137) erfassen und absichtlich dazu ausgebildet sind, mit einer niedrigeren Genauigkeit (140) vorherzusagen; und
1.4 Verwenden (720) der mehreren schwachen Lerner, um für eine endgültige Hypothese (142, 525) basierend auf einer Feed-Forward-Berechnung neuronaler Netzwerke zu stimmen;
1.5 Anwenden des Boosting-Algorithmus (122) auf die Bilddetektionsanwendung; und
1.6 Verwenden eines schwachen Lerners (127) eines Single-Shot-Detektors (SSD), wobei mindestens zwei Hyperparameter verwendet werden, um ein neuronales Netzwerk absichtlich schwach zu machen,
1.7 wobei die mindestens zwei Hyperparameter einen Breitenmultiplikator (152), der ein neuronales Netzwerk an jeder Schicht ausdünnt, und einen Auflösungsmultiplikator (152), der eine Eingabebildauflösung reduziert, beinhalten.

2. Verfahren (600, 700) nach Anspruch 1, wobei jeder der mehreren schwachen Lerner eine Liste von Ausgabebegrenzungskästen (155) und ihren jeweiligen Klassen (157) zurückgibt.

3. Verfahren (600, 700) nach Anspruch 1, ferner umfassend:
Verwenden des Boosting-Algorithmus (122) direkt für eine typische Regressionsaufgabe oder eine Klassifikationsaufgabe.

4. Verfahren (600, 700) nach Anspruch 1, ferner umfassend:
Verwenden des Boosting-Algorithmus (122) für eine Bilddetektionsaufgabe, wobei jeder der mehreren schwachen Lerner eine Liste von Ausgabebegrenzungskästen (155) und ihren jeweiligen Klassen (157) zurückgibt;
Gruppieren aller Ausgabebegrenzungskästen (155) und aller Klassen (157) zu einem Satz, sodass der Satz viele Vorhersagen mit geringem Konfidenzniveau und Duplikate enthält;
Verwerfen der vielen Vorhersagen mit geringem Konfidenzniveau durch Verwenden einer Schwelle (170); und
Anwenden einer Nicht-Maximum-Unterdrückung, um die Duplikate zu reduzieren.

5. Verfahren (600, 700) nach Anspruch 1, wobei der Boosting-Algorithmus (122) eine Verringerung der Varianz garantiert, ohne einen Bias (162) zu erhöhen, wodurch das neuronale Netzwerkmodell verallgemeinerbarer gemacht wird.

6. Verfahren (600, 700) nach Anspruch 1, wobei der Boosting-Algorithmus (122) mehrere verteilte neuronale Netzwerkmodelle (125, 135) kombiniert, um ein komplexeres neuronales Netzwerkmodell zu erzeugen.

7. Verfahren (600, 700) nach Anspruch 1, ferner umfassend:
Kombinieren aller Ausgaben, um dem neuronalen Netzwerkmodell zu ermöglichen, eine Vapnik-Chervonenkis(VC)-Dimension zu erweitern, die effektiv eine größere zugrundeliegende Verteilung von Trainingsdaten abdeckt.

8. Verfahren (600, 700) nach Anspruch 1, ferner umfassend:
mit dem Training des Boosting-Algorithmus (122) konzentriert sich jeder schwache Lerner (127) der mehreren schwachen Lerner auf eine neu abgetastete Teilmenge eines Datensatzes.

9. Neuronales Netzwerksystem (105) zum Boosten verteilter neuronaler Netzwerke, wobei das System (105, 810, 1034) eine programmierbare Logiksteuerung (107), PLC, eine Vielzahl von Verarbeitungseinheiten (110), einen Prozessor (112, 820); und einen zugänglichen Speicher umfasst, der ein neuronales Programm speichert, das Softwareanweisungen (120) umfasst, die, wenn sie durch den Prozessor (112, 820) ausgeführt werden, ausgelegt sind zum:
Bereitstellen eines Boosting-Algorithmus (122), der ein neuronales Netzwerkmodell auf eine Vielzahl von Verarbeitungseinheiten (110) verteilt, wobei jede der Vielzahl von Verarbeitungseinheiten (110) ein schwacher Lerner (127) mehrerer schwacher Lerner ist, die Berechnungen unabhängig voneinander durchführen können, aber gleichzeitig Daten verarbeiten, wobei für die schwachen Lerner (127) neuronale Netzwerke verwendet werden;
Aktivieren eines verteilten Ensemble-Lernens, das es der PLC ermöglicht, mehr als eine der Verarbeitungseinheiten (110) der Vielzahl von Verarbeitungseinheiten (110) zu verwenden, um eine Bilddetektionsanwendung (130) zu skalieren;
Trainieren der mehreren schwachen Lerner unter Verwendung des Boosting-Algorithmus (122), wobei die mehreren schwachen Lerner keine gesamte Datenverteilung (137) erfassen und absichtlich dazu ausgebildet sind, mit einer niedrigeren Genauigkeit (140) vorherzusagen; und
Verwenden der mehreren schwachen Lerner, um für eine endgültige Hypothese (142, 525) basierend auf einer Feed-Forward-Berechnung neuronaler Netzwerke zu stimmen;
Anwenden des Boosting-Algorithmus (122) auf die Bilddetektionsanwendung; und
Verwenden eines schwachen Lerners (127) eines Single-Shot-Detektors (SSD), wobei mindestens zwei Hyperparameter verwendet werden, um ein neuronales Netzwerk absichtlich schwach zu machen,
wobei die mindestens zwei Hyperparameter einen Breitenmultiplikator (152), der ein neuronales Netzwerk an jeder Schicht ausdünnt, und einen Auflösungsmultiplikator (152), der eine Eingabebildauflösung reduziert, beinhalten.

10. Neuronales Netzwerksystem (105) nach Anspruch 9, wobei jeder der mehreren schwachen Lerner eine Liste von Ausgabebegrenzungskästen (155) und ihren jeweiligen Klassen (157) zurückgibt.

11. Nichtflüchtiges computerlesbares Speichermedium, das mit Anweisungen codiert ist, die, wenn sie durch mindestens einen Prozessor (112, 820), eine programmierbare Logiksteuerung (107), PLC, und eine Vielzahl von Verarbeitungseinheiten (110) eines neuronalen Netzwerksystems (105) nach Anspruch 9 ausgeführt werden, das Verfahren nach einem oder mehreren der Ansprüche 1 bis 8 durchführen.

## Revendications

1. Procédé (600) de renforcement distribué de réseaux neuronaux, le procédé (600, 700) étant mis en œuvre par un système de réseaux neuronaux (105) comportant un automate programmable (107), PLC, au moins un processeur (112, 820) et une pluralité d'unités de traitement (110) et comprenant :
par le biais de l'exploitation dudit au moins un processeur (112, 820) :
1.1 la fourniture (705) d'un algorithme de renforcement (122) qui distribue un modèle de réseaux neuronaux parmi la pluralité d'unités de traitement (110), chacune de la pluralité d'unités de traitement (110) étant un apprenant faible (127) parmi de multiples apprenants faibles qui peuvent effectuer des calculs indépendamment les uns des autres tout en traitant simultanément des données, des réseaux neuronaux étant utilisés pour les apprenants faibles (127) ;
1.2 le fait de permettre (710) un apprentissage d'ensemble distribué qui permet au PLC d'utiliser plus d'une des unités de traitement (110) de la pluralité d'unités de traitement (110) pour mettre à l'échelle une application de détection d'image (130) ;
1.3 l'entraînement (715) des multiples apprenants faibles à l'aide de l'algorithme de renforcement (122), dans lequel les multiples apprenants faibles ne capturent pas une distribution de données entière (137) et sont conçus pour une prédiction de précision inférieure (140) ; et
1.4 l'utilisation (720) des multiples apprenants faibles pour voter pour une hypothèse finale (142, 525) sur la base d'un calcul sans rétroaction de réseaux neuronaux ;
1.5 l'application de l'algorithme de renforcement (122) à l'application de détection d'image ; et
1.6 l'utilisation d'un apprenant faible (127) avec détecteur en un coup (SSD) dans lequel au moins deux hyperparamètres sont utilisés pour rendre intentionnellement faible un réseau neuronal,
1.7 dans lequel lesdits au moins deux hyperparamètres comprennent un multiplicateur de largeur (152) qui amincit un réseau neuronal au niveau de chaque couche et un multiplicateur de résolution (152) qui réduit une résolution d'image d'entrée.

2. Procédé (600, 700) selon la revendication 1, dans lequel chacun des multiples apprenants faibles renvoie une liste de boîtes englobantes de sortie (155) et leurs classes respectives (157).

3. Procédé (600, 700) selon la revendication 1, comprenant en outre :
l'utilisation directe de l'algorithme de renforcement (122) pour une tâche de régression typique ou une tâche de classification.

4. Procédé (600, 700) selon la revendication 1, comprenant en outre :
l'utilisation de l'algorithme de renforcement (122) pour une tâche de détection d'image, dans lequel chacun des multiples apprenants faibles renvoie une liste de boîtes englobantes de sortie (155) et leurs classes respectives (157) ;
le regroupement de toutes les boîtes englobantes de sortie (155) et de toutes les classes (157) en un ensemble de telle sorte que l'ensemble contienne un grand nombre de prédictions et de doublons de faible confiance ;
le rejet du grand nombre de prédictions de faible confiance à l'aide d'un seuil (170) ; et
l'application d'une suppression non maximale pour réduire les doublons.

5. Procédé (600, 700) selon la revendication 1, dans lequel l'algorithme de renforcement (122) garantit une réduction de variance sans augmentation de biais (162), rendant ainsi le modèle de réseaux neuronaux plus généralisable.

6. Procédé (600, 700) selon la revendication 1, dans lequel l'algorithme de renforcement (122) combine de multiples modèles de réseaux neuronaux distribués (125, 135) pour créer un modèle de réseaux neuronaux plus complexe.

7. Procédé (600, 700) selon la revendication 1, comprenant en outre :
la combinaison de toutes les sorties pour permettre au modèle de réseaux neuronaux d'étendre une dimension de Vapnik-Chervonenkis (VC) couvrant en fait une distribution sous-jacente plus large des données d'entraînement.

8. Procédé (600, 700) selon la revendication 1, comprenant en outre :
par l'entraînement de l'algorithme de renforcement (122), chaque apprenant faible (127) parmi les multiples apprenants faibles se concentre sur un sous-ensemble rééchantillonné d'un ensemble de données.

9. Système de réseaux neuronaux (105) pour le renforcement distribué de réseaux neuronaux, le système (105, 810, 1034) comprenant un automate programmable (107), PLC, une pluralité d'unités de traitement (110), un processeur (112, 820) ; et une mémoire accessible stockant un programme neuronal comprenant des instructions logicielles (120) qui, lorsqu'elles sont exécutées par le processeur (112, 820), sont conçues pour :
fournir un algorithme de renforcement (122) qui distribue un modèle de réseaux neuronaux parmi une pluralité d'unités de traitement (110), chacune de la pluralité d'unités de traitement (110) étant un apprenant faible (127) parmi de multiples apprenants faibles qui peuvent effectuer des calculs indépendamment les uns des autres tout en traitant simultanément des données, des réseaux neuronaux étant utilisés pour les apprenants faibles (127) ;
permettre un apprentissage d'ensemble distribué qui permet au PLC d'utiliser plus d'une des unités de traitement (110) de la pluralité d'unités de traitement (110) pour mettre à l'échelle une application de détection d'image (130) ;
entraîner les multiples apprenants faibles à l'aide de l'algorithme de renforcement (122), dans lequel les multiples apprenants faibles ne capturent pas une distribution de données entière (137) et sont conçus pour une prédiction de précision inférieure (140) ; et
utiliser les multiples apprenants faibles pour voter pour une hypothèse finale (142, 525) sur la base d'un calcul sans rétroaction de réseaux neuronaux.
appliquer l'algorithme de renforcement (122) à l'application de détection d'image ; et
utiliser un apprenant faible (127) à détecteur en un coup (SSD) dans lequel au moins deux hyperparamètres sont utilisés pour rendre intentionnellement faible un réseau neuronal,
dans lequel lesdits au moins deux hyperparamètres comprennent un multiplicateur de largeur (152) qui amincit un réseau neuronal au niveau de chaque couche et un multiplicateur de résolution (152) qui réduit une résolution d'image d'entrée.

10. Système de réseaux neuronaux (105) selon la revendication 9, dans lequel chacun des multiples apprenants faibles renvoie une liste de boîtes englobantes de sortie (155) et leurs classes respectives (157).

11. Support de stockage non transitoire lisible par ordinateur sur lequel sont codées des instructions qui, lorsqu'elles sont exécutées par au moins un processeur (112, 820), un automate programmable (107), PLC, et une pluralité d'unités de traitement (110) d'un système de réseaux neuronaux (105) selon la revendication 9, mettent en œuvre le procédé selon une ou plusieurs des revendications 1 à 8.
